# EUROPEAN PATENT APPLICATION

(11) **EP 4 287 676 A1**
(43) Date of publication of application: **06.12.2023**
(21) Application number: 22176217.2
(22) Date of filing: 30.05.2022
(51) Int. Cl.: H04W 12/08, G06Q 20/04, H04W 12/77, G06Q 20/32

(54) **METHOD FOR PROVIDING AN ELECTRONIC TICKET ON A DISPLAY OF AN ELECTRONIC MOBILE DEVICE**

(71) Applicant: CTS Eventim AG & Co. KGaA, 28195 Bremen (DE)
(72) Inventor: Meier, Kai, 28195 Bremen (DE); Kästner, Ingo, 28195 Bremen (DE); Hack, Kerstin, 28195 Bremen (DE)
(74) Representative: RGTH

(57) **Abstract**

To provide a method for providing an electronic ticket on a display of an electronic mobile device, which prevents unauthorized copies of electronic tickets and/or makes unauthorized copies of electronic tickets easily identifiable by control staff, a method (100) for providing an electronic ticket (10) on a display (11) of an electronic mobile device (200) is provided, comprising displaying ticket information (16) in a region (13) of a display (11) of an electronic mobile device (200), wherein the region (13) of the display (11) is allocated for displaying the electronic ticket (10), wherein time information (19) is being displayed in the region (13) of the display (11) of the electronic mobile device (200) allocated for displaying the electronic ticket (10), wherein the time information (19) is continuously updated in accordance with a time signal of a timing device (22).

## Description

The present invention relates to a method for providing an electronic ticket on a display of an electronic mobile device comprising displaying ticket information in a region of a display of an electronic mobile device, wherein the region of the display is allocated for displaying the electronic ticket.

Furthermore, the present invention relates to a computer program product and to an electronic mobile device.

### Technological background

Tickets, for example admission tickets for cultural events and venues such as concerts, sports games, movies or museums but also tickets for transportation services, have in the past been printed on paper and physically distributed to customers. For ease of use such tickets now are generally distributed electronically. These electronically distributed tickets may either be printed out by the customer and presented in paper form at the entrance of a venue, or alternatively and increasingly commonly the electronic tickets are presented on a display of an electronic mobile device, such as a smartphone or a smartwatch, to control personal at the venue. The control personal then either checks the validity of the displayed electronic ticket visually or the electronic ticket is read with a scanning device such as a barcode reader and the validity of the electronic ticket is checked electronically.

Any ticket carries a certain worth, which therefore make them subject to illegal copies. To protect against illegal copies several concepts have been established. For example, for copy protection of electronic tickets cryptographic functions can be used. Other solutions propose the use of animations of ticket information, so that digital screen shots can easily be identified.

Prior art document EP 1 668 598 B1 discloses an active ticket having a ticket characteristic of appearance or presentation that dynamically changes based on one or more states in a life cycle of the active ticket. The ticket characteristic may be in the form of multimedia information, text, sound, animation, video or pictures.

US 2003/0054801 A1 discloses a method for the transmission of authorization information, wherein authorization information is presented on the display of a mobile station and wherein the authorization information presented is read from the display of the mobile station and its authenticity is verified. The authorization information is sent in a form comprising information to be presented in a graphic form, and the authorization information is presented on the display of the mobile station using a user independent function of the mobile station in question for the presentation of the graphic information.

EP 1 069 539 A2 discloses an electronic ticket. The electronic ticket is stored in an electronic wallet of a mobile user terminal and its validity is checked using infrared communications between the mobile user terminal and a gate terminal at a venue.

However, tickets can still be illegally copied. For example, by using screen capture techniques or screen recording techniques unauthorized persons may record tickets comprising animated information, so that the illegal copies are visually indistinguishable from the original animated ticket.

Thus, there exists the need for additional security against unauthorized copying of electronic tickets.

### Disclosure of the invention: problem, solution, advantages

It is an object of the present invention to provide a method for providing an electronic ticket on a display of an electronic mobile device, which prevents unauthorized copies of electronic tickets and/or makes unauthorized copies of electronic tickets easily identifiable by control staff.

To solve the object the present invention proposes a method for providing an electronic ticket on a display of an electronic mobile device, comprising displaying ticket information in a region of a display of an electronic mobile device, wherein the region of the display is allocated for displaying the electronic ticket, and wherein time information is being displayed in the region of the display of the electronic mobile device allocated for displaying the electronic ticket, wherein the time information is continuously updated in accordance with a time signal of a timing device.

The electronic ticket may be configured as any ticket comprising authorization information to authorize the legal owner of the electronic ticket to the use of a service or to the attendance of an event, such as a cultural event.

The electronic ticket may in particular be an admission ticket for a concert, a sports game, a museum, a movie or the like.

The ticket information and/or the electronic ticket is displayed on a display of an electronic mobile device. The electronic mobile device may be any portable electronic mobile device such as, but not limited to, a smartphone, a smartwatch, a personal digital assistant (PDA), a tablet or the like. The electronic mobile device may also be integrated in any wearable, for example in smart clothing.

For displaying the electronic ticket and/or the ticket information a region of the display of the electronic device is allocated for displaying the electronic ticket.

For displaying user or application data and information electronic mobile devices generally allocate a region of the display, which may or may not extend over the entire display. The region of the display allocated for displaying user or application data and information generally extends over most of the display.

In addition, electronic mobile devices may also allocate a reserved region of the display for displaying system information, such as provider information, signal strength, battery status or time. This reserved region of the display is often located at the top or at the bottom of the display of the electronic mobile device. The reserved region is different from the region allocated for displaying user or application data and information.

The region of the display allocated for displaying the electronic ticket is preferably the region of the display allocated for displaying user or application data and information. In particular, the region of the display allocated for displaying the electronic ticket is not the reserved region of the display for displaying system information.

The ticket information may comprise information such as the name and the date of the event, the name and/or address of the owner of the ticket, seating information or graphical information such as pictures or photos relating to the event or venue to which the electronic ticket provides admission rights.

According to the present invention time information is being displayed in the region of the display of the electronic mobile device allocated for displaying the electronic ticket, wherein the time information is continuously updated in accordance with the time signal of a timing device.

Thus, the time information is shown in the region of the display allocated for displaying the electronic ticket and preferably not in the region of the display reserved for displaying system information. Thus, the time information is presented as a part of or belonging to the electronic ticket.

In particular, the time information is displayed in the same region of the display, in which further ticket information is displayed.

By displaying time information in the region of the display of the electronic mobile device allocated for displaying the electronic ticket, wherein the time information is continuously updated in accordance with the time signal of a timing device, unauthorized copies of the electronic ticket can easily be identified by control staff when the validity of the ticket is checked visually or electronically, for example using optical reading devices.

In particular, screen recordings or animated screen captures can be identified, so that unauthorized copies of the electronic ticket can be rejected. For example, if a person makes an unauthorized copy of the electronic ticket using screen recordings or animated screen captures in advance of an event to which the ticket provides admission rights, the unauthorized copy will inevitably comprise the time information from the time the copy has been made. When the unauthorized copy is presented to control staff at the entrance to the event or venue the deviation of the time information displayed in the unauthorized copy from the actual time information is readily apparent to the control staff or can be detected electronically if, for example, the ticket's validity is checked using a scanning device.

Preferably the time information comprises the actual time, wherein the time information further preferably comprises the actual time with a precision of seconds.

Thus, in a preferred embodiment the time information displayed in the region of the display allocated for displaying the electronic ticket is the actual time. The actual time may be displayed in any suitable time format. Control staff can then easily check whether the ticket presented to them is a valid ticket since only the time information shown with the original ticket corresponds to the actual time, while the time information shown in unauthorized screen recordings of the ticket will correspond to the time the copy has been made. In this regard it is particularly advantageous if the time information comprises the actual time with a precision of seconds. Since the process of checking the validity of an electronic ticket usually takes a few seconds, unauthorized copies of electronic tickets can easily be identified if the time displayed in the region of the display of the electronic mobile device allocated for displaying the electronic ticket differs from the actual time by only a few seconds.

Alternatively or additionally the time information may be encoded in machine-readable information displayed in the region of the display of the electronic mobile device allocated for displaying the electronic ticket.

For example, the time information, preferably the actual time, may be encoded in machine-readable information in form of a one- or two-dimensional barcode or matrix code, in particular a QR-code.

In such a case the machine-readable information, in particular the barcode or the matrix code, can be read with a scanning device, such as an optical barcode or QR-code reader, at the entrance to an event or venue, and the time information can be electronically extracted from the machine-readable code and compared to expected time information.

If the time information is encoded in machine-readable information, for example in a barcode, a matrix code or a QR-code, the visual appearance of the machine-readable information preferably also changes and/or is updated in accordance with the time signal of the timing device. Because of the nature of the machine-readable information the encoded time information will not be readable by a human person and can only be extracted electronically using a scanning device. In addition, since any person who wants to make an unauthorized copy of the electronic ticket does not know how the time information is encoded in the machine-readable information, he or she will not be able to fabricate the appearance of the machine-readable information in advance before the time entry to an event or venue is provided.

The machine-readable information may also comprise further information such as ticket identification information, event information or information on the rightful owner of the ticket or the like.

Furthermore preferably, the timing device is an internal clock of the electronic mobile device.

Electronic mobile devices, such as smartphones, smartwatches and the like, comprise integrated circuitry configured as a timing device, in particular as an internal clock. Therefore, in a preferred embodiment a time signal send by the internal timing device of the electronic mobile device is used to display the time information in the region of the display of the electronic device allocated for displaying the electronic ticket.

This provides the advantage, that the time information can be displayed even if the electronic mobile device is not in communication with an external timing device. In particular, the timing information can be displayed even if the electronic mobile device is not connected to the internet.

Alternatively or additionally the timing device may also be an external device, wherein the time signal is received by the electronic mobile device via an internet connection or wireless connection.

Furthermore preferably, the time information is displayed in a time information orientation having an angle with the orientation of the display, and/or with the orientation of the ticket information.

Further preferably, the angle is between 0° and 180°, still further preferably between 60° and 120°, particularly preferably 90°.

Thus, when the electronic ticket is displayed on the display such that the ticket information such as name and time of the event is normally oriented and can be easily read, the time information, in particular the actual time, presented in a suitable time format is rotated or tilted with respect to the other ticket information. By displaying the time information at an angle with the display and/or with the ticket information, the time information can be easily distinguished from the ticket information and/or from system information, which may be displayed in a region of the display reserved for displaying system information.

Modern electronic mobile devices such as smartphones, smartwatches and PDAs and the like usually comprise a position sensor which detects a change of orientation of the mobile electronic device. For example, if a person rotates the electronic mobile device clockwise or anti-clockwise the position sensor of the electronic mobile device will detect this rotation and the display of the electronic mobile device will change from portrait mode to landscape mode and vice versa.

The time information orientation may have an angle with the orientation of the display and/or with the orientation of the ticket information either only in the landscape mode or only in the portrait mode, or the time information orientation may have an angle with the orientation of the display and/or with the orientation of the ticket information in both the landscape mode and the portrait mode.

Furthermore preferably, the time information is displayed at a fixed location in the region, or the time information is alternately displayed at different locations in the region, wherein preferably the alternating display of the time information at different locations in the region is synchronized with the time signal of the timing device.

Thus, the time information may be displayed at a fixed and unchangeable location in the region of the display of the electronic mobile device allocated for displaying the electronic ticket and/or with respect to the ticket information, or the time information may be displayed at alternating locations in the region of the display of the electronic mobile device allocated for displaying the electronic ticket and/or with respect to the ticket information. In the latter case the time information may be displayed at different locations in synchronization with the time signal. For example, the time information may be displayed at a different location in the display or with respect to the ticket information every second, every other second or every five seconds. Since any person making an unauthorized copy of the electronic ticket does not know in advance in what time intervals the time information will be shown at which different locations a further layer of security is provided.

Further preferably, an animated graphical pattern is being displayed in the region of the display of the electronic mobile device allocated for displaying the electronic ticket.

By providing an animated graphical pattern unauthorized copying of the electronic ticket using still screen shots is prevented.

Further preferably, the animated graphical pattern is a color gradient.

Still further preferably, the animated graphical pattern, preferably the color gradient, is rotating and/or shifting in a shifting direction .

Thus, the animated graphical pattern or the color gradient may be rotating with respect to the display and/or with respect to the ticket information, or the animated graphical pattern or the color gradient may be shifting in a shifting direction. The shifting direction may be at any angle with respect to the display or the ticket information orientation.

Preferably, the time information is overlayed on the animated graphical pattern.

The animated graphical pattern and/or the color gradient may be a background animated graphical pattern or a background color gradient, so that ticket information and/or time information and/or machine-readable information is overlaid on the animated graphical pattern or the color gradient. It is also possible that the color gradient or the animated graphical pattern is a foreground pattern.

Further preferably the animated graphical pattern, in particular the color gradient, further particularly the rotating color gradient, is synchronized with the time signal of the timing device.

If the animated graphical pattern, preferably the color gradient, is rotating, it may be rotating at rate of one rotation per second or per every two second or per every five seconds. Thus, control staff may easily detect the synchronization of the animation of the animated graphical pattern with the time signal of the timing device and/or with the time information being displayed in the region of the display allocated for displaying the electronic ticket.

Preferably, a characteristic of the animated graphical pattern and/or of the displayed time information is changed, so that the time information is always readable, in particular when the time information is overlayed on the animated graphical pattern.

When the time information is overlaid on the animated graphical pattern situations may occur in which the time information may become difficult to read and/or identify. For example, if the animated graphical pattern is a rotating color gradient, at times the time information may be overlaid on a darker color of the color gradient and become momentarily unreadable. In this case, the characteristic of the animated graphical pattern and/or of the displayed time information is changed so that the time information can be read against the animated graphical pattern.

Preferably the characteristic of the animated graphical pattern and/or of the displayed time information is a color, a size, a contrast value or a brightness value.

Still further preferably the time information and/or the animated graphical pattern changes brightness in synchronization with the time signal.

In this case the animated graphical pattern and/or the time information may perceivably change brightness in synchronization with the time signal, for example every second, every two second or every five seconds. In other words, the time information and/or the animated graphical pattern may flash up in synchronization with the time signal. By checking the time information displayed on the display, control staff will easily recognize the synchronized change in brightness of the animated graphical pattern and/or of the time information.

Furthermore preferably, machine-readable information is displayed in the region, wherein the machine-readable information is preferably a barcode and/or a matrix code, particularly preferably a QR-Code.

The machine-readable information may contain ticket identification information, event information or information on the rightful owner of the ticket or the like. As described above, the machine-readable information may also comprise the time information which is, in this case, encoded in the machine-readable information.

Still further preferably the machine-readable information changes its orientation with respect to the display in response to a change in orientation of the display and/or of the electronic mobile device, and/or wherein the time information preferably does not changes its orientation with respect to the display in response to a change in orientation of the display and/or of the electronic mobile device.

Thus, if a position sensor of the electronic mobile device detects a clockwise or anti-clockwise rotation of the electronic mobile device the display of the electronic mobile device may change from portrait mode to landscape mode or vice versa. In this case, the machine-readable information may rotate in the other direction of the rotation of the display or of the mobile electronic device, so that is always displayed on the display in the correct orientation. The electronic ticket may be configured such that the time information either does not change its orientation with respect to the display in response to a change in orientation of the display and/or of the electronic mobile device or it may be configured such that the time information changes its orientation with respect to the display in response to a change in orientation of the display and/or of the electronic mobile device.

Still further preferably the machine-readable information wiggles for a predefined time period after it has changed its orientation with respect to the display, wherein the predefined time period is preferably less than 0.5 seconds.

By providing a wiggling or shaking effect of the machine-readable information upon change of its orientation for a predefined time period a further visual characteristic is provided to control staff which can be used to distinguish a valid electronic ticket from an invalid or copied electronic ticket.

Furthermore, it may be preferred that the time information and/or the animated graphical pattern and/or the machine-readable information is displayed only when a predefined condition is met, wherein the predefined condition is a predefined time or a predefined location of the electronic mobile device, preferably a location in the vicinity of a predefined venue.

For example, the predefined condition may be a predefined time before the time of admission or entrance to a venue or event. For example, the method may be configured such that an hour before the start of the event the time information and/or the animated graphical pattern and/or the machine-readable code is displayed and that before that time at least one of the time information, the animated graphical pattern or the machine-readable code is not displayed on the display in the region of the display allocated for displaying the electronic ticket. Since at least one of the time information, the ticket information and/or the machine-readable information is not displayed before the predefined time, unauthorized copies of the electronic tickets are made more difficult.

Another possible condition to be met may be that the electronic mobile device is in a predefined location, preferably in a location in the vicinity of a predefined venue.

For evaluation of this condition locating services of the mobile electronic device may be used. For example, modern electronic mobile devices such as smartphones comprise GPS receivers which allow the mobile electronic device to be located with a precision of a few meters. Thus, when the mobile electronic device is close to the location of the venue to which the electronic ticket provides admission rights, the condition is met and only then at least one of the time information, the ticket information and/or the machine-readable information is displayed on the display.

Still further preferably the machine-readable information is overlayed on the animated graphical pattern, so that the machine-readable information appears to be surrounded by a strip of the animate graphical pattern.

In order for the machine-readable information to be read by a scanning device, the machine-readable information may be presented on a, preferably white, background when overlaid on the animated graphical pattern.

Furthermore, the time information may be overlaid on the animated graphical pattern in the strip.

Still further preferably a boundary of the animated graphical pattern is a rectangle or a square, wherein the machine-readable information is preferably displayed centered in the animated graphical pattern.

Another solution to the object of the present invention is the provision of a computer program product comprising instructions which, when the program is executed by an electronic mobile device, in particular by a smartphone or a smartwatch, cause the electronic mobile device to carry out a method as described above.

Still further, another solution to the object of the present invention is the provision of an electronic mobile device, in particular a smartphone or a smartwatch, comprising a data storage device, wherein a computer program product as described above is stored in the data storage device.

### Short description of the figures

The invention is described in more detail with reference to the accompanying figures.
- Fig. 1: shows an electronic ticket displayed on a display of an electronic mobile device,
- Fig. 2a: shows a clockwise rotation of the electronic mobile device, and
- Fig. 2b: shows an anti- clockwise rotation of the electronic mobile device.

### Detailed description of the figures

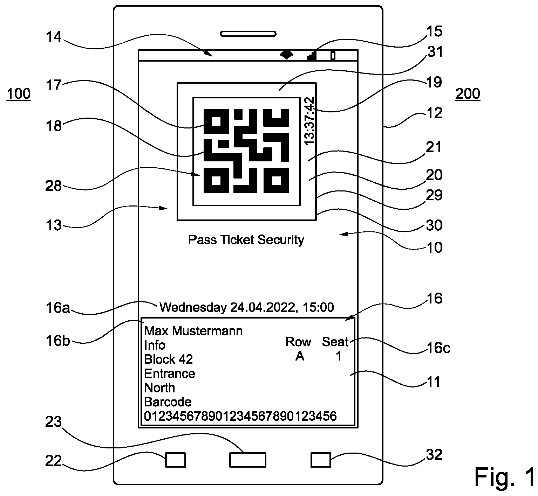

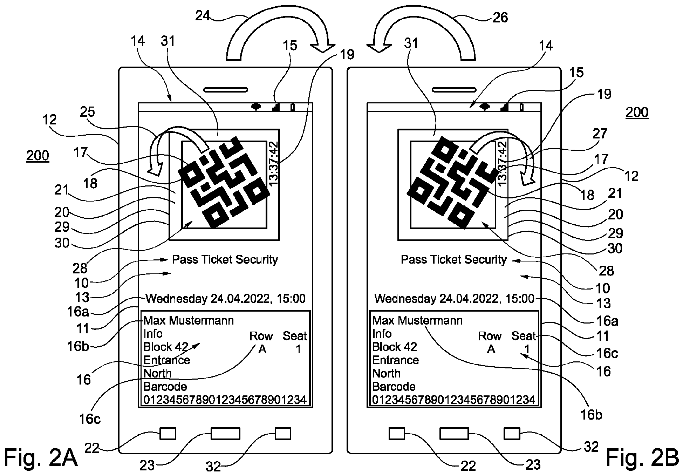

A method 100 for providing an electronic ticket 10 on a display 11 of an electronic mobile device 200 is described in more detail with reference to figures 1, 2A and 2B.

The electronic mobile device 200 shown in the figures is configured as a smartphone 12 and comprises a display 11. The display 11 comprises two regions 13, 14. A first region 13 of the display 11 of the electronic mobile device 200 is allocated for displaying the electronic ticket 10, while a second region 14 of the display 11 of the electronic device 200 is allocated for displaying system information 15 such as signal strength, battery charge etc.

When the method 100 is carried out ticket information 16 is displayed in the region 13 of the display 11 of the electronic mobile device 200 allocated for displaying the electronic ticket 10. The ticket information 16 may comprise the name or title, date and entrance time 16a of the venue and/or event, the name 16b of the owner of the electronic ticket 10 and seating information 16c.

Furthermore, in the region 13 of the display 11 allocated for displaying the electronic ticket 10 machine-readable information 17 is displayed. In the embodiment shown in the figures the machine-readable information 17 is configured as a QR-code 18 which can be scanned at an event or venue using an optical scanning device to allow the owner of the electronic ticket 10 entrance to the event or venue. In addition to the ticket information 16 and the machine-readable information 17 time information 19 is displayed in the region 13 of the display 11 allocated for displaying the electronic ticket 10. The time information 19 is configured as the actual time with a precision of seconds and continuously updated in accordance with a time signal of a timing device 22 of the electronic mobile device 200. The time information 19 is displayed with a time information orientation having an angle of 90° to the orientation of the display 11 and/or to the orientation of the ticket information 16.

Because of the time information 19 being the actual time, unauthorized copies of the electronic ticket 10 made using screen recordings or screen capture techniques can be easily identified, since any such unauthorized copy will show time information from the time the copy has been made and not the actual time.

The time information 19 is overlaid on an animated graphical pattern 20 which is configured as a rotating color gradient 21. Alternatively or additionally the time information 19 may also be encoded in the machine-readable information 17, in which case the machine-readable information 17 will be continuously updated in accordance with a time signal of the timing device 22.

The rotating color gradient 21 comprises darker colors so that because of the rotation of the color gradient 21 the darker colors will be from time to time background to the time information 19, which then may be difficult to read by control staff. Thus, in a preferred embodiment the color gradient 21 and/or the time information 19 may change their brightness or color whenever the time information 19 is hard to read.

The electronic mobile device 200 furthermore comprises a position sensor 23 which is configured to detect a change of orientation such as a rotation of the mobile electronic device 200 and allows for the display 11 to enter portrait mode and/or landscape mode depending on the orientation of the electronic mobile device 200. For example, if the electronic mobile device 200 is rotated clockwise, as indicated with arrow 24 in Fig. 2A the machine-readable information 17 will be rotated in the opposite, anti-clockwise direction indicated with arrow 25, so that when the display 11 enters landscape mode the machine-readable information 17 will still be oriented correctly. On the other hand, if the electronic mobile device 200 is rotated anti-clockwise, as indicated with arrow 26 in Fig. 2B the machine-readable information 17 will be rotated in the clockwise direction indicated with arrow 27. After rotation of the machine-readable information 17 the machine-readable information 17 may wiggle or shake for a predefined time period with respect to the display 11. The predefined time period may be less than 0.5 seconds.

In order for the machine-readable information 17 to be always visible and/or readable by an optical scanning device the machine-readable information 17 is provided with a white background 28. When the electronic mobile device 200 is rotated clockwise or anti-clockwise all other elements of the displayed electronic ticket 10 such as the ticket information 16, the time information 19 and the color gradient 21 will not change their orientation. Only the machine-readable information 17 will rotate on the white background 28.

The animated graphical pattern 20, in particular the rotating color gradient 21 has a boundary 29 which is configured in the form of a square 30 and the machine-readable information 17 is displayed centered in the animated graphical pattern 20. Thus, it appears as that the machine-readable information 17 is surrounded by a strip 31 of the animated graphical pattern 20.

The method 100 can be implemented in a computer program product stored in a data storage device 32 of the electronic mobile device 200.

### List of reference numerals

- 100: Method for providing an electronic ticket on a display of an electronic mobile device
- 200: Electronic mobile device
- 10: Electronic ticket
- 11: Display
- 12: Smartphone
- 13: Region
- 14: Region
- 15: System information
- 16: Ticket information
- 16a: Date and entrance time
- 16b: Name
- 17: Machine-readable information
- 18: QR-code
- 19: Time information
- 20: Animated graphical pattern
- 21: Color gradient
- 22: Timing device
- 23: Position sensor
- 24: Arrow
- 25: Arrow
- 26: Arrow
- 27: Arrow
- 28: White background
- 29: Boundary
- 30: Square
- 31: Strip
- 32: Data storage device

## Claims

1. Method (100) for providing an electronic ticket (10) on a display (11) of an electronic mobile device (200), comprising displaying ticket information (16) in a region (13) of a display (11) of an electronic mobile device (200), wherein the region (13) of the display (11) is allocated for displaying the electronic ticket (10), **characterized in that** time information (19) is being displayed in the region (13) of the display (11) of the electronic mobile device (200) allocated for displaying the electronic ticket (10), wherein the time information (19) is continuously updated in accordance with a time signal of a timing device (22).

2. Method (100) according to claim 1, wherein the time information (19) comprises the actual time, wherein the time information (19) preferably comprises the actual time with a precision of seconds, and/or wherein the timing device (22) is an internal clock of the electronic mobile device (200).

3. Method (100) according to claim 1 or 2, wherein the time information (19) is displayed in a time information orientation having an angle with the orientation of the display (11), and/or with the orientation of the ticket information (16), wherein preferably the angle is between 0° and 180°, further preferably between 60° and 120°, still further preferably 90°.

4. Method (100) according to one of the preceding claims, wherein an animated graphical pattern (20) is being displayed in the region (13) of the display (11) of the electronic mobile device (200) allocated for displaying the electronic ticket (10), wherein preferably the animated graphical pattern (20) is a color gradient (21).

5. Method (100) according to claim 4, wherein the animated graphical pattern (20), preferably the color gradient (21), is rotating and/or shifting in a shifting direction.

6. Method (100) according to claim 4 or 5, wherein the time information (19) is overlayed on the animated graphical pattern (20), and/or wherein the animated graphical pattern (20), in particular the color gradient (21), further particularly the rotating color gradient (21), is synchronized with the time signal of the timing device (22).

7. Method (100) according to one of claims 4 to 6, wherein a characteristic of the animated graphical pattern (20) and/or of the displayed time information (19) is changed, so that the time information (19) is always readable, in particular when the time information (19) is overlayed on the animated graphical pattern (20), wherein preferably the characteristic of the animated graphical pattern (20) and/or of the displayed time information (19) is a color, a size, a contrast value or a brightness value.

8. Method (100) according to one of the preceding claims, wherein the time information (19) and/or the animated graphical pattern (20) changes brightness in synchronization with the time signal.

9. Method (100) according to one of the preceding claims, wherein machine-readable information (17) is displayed in the region (13), wherein the machine-readable information (17) is preferably a barcode and/or a matrix code, particular preferably a QR-Code (18).

10. Method (100) according to one of the preceding claims, wherein the machine-readable information (17) changes its orientation with respect to the display (11) in response to a change in orientation of the display (11) and/or of the electronic mobile device (200), and/or wherein the time information (19) does not changes its orientation with respect to the display (11) in response to a change in orientation of the display (11) and/or of the electronic mobile device (200), wherein preferably the machine-readable information (17) wiggles for a predefined time period after it has changed its orientation with respect to the display (11), wherein the predefined time period is further preferably less than 0.5 seconds.

11. Method (100) according to one of the preceding claims, wherein the time information (19) and/or the animated graphical pattern (20) and/or the machine-readable information (17) is displayed only when a predefined condition is met, wherein the predefined condition is a predefined time or a predefined location of the electronic mobile device (200), preferably a location in the vicinity of a predefined venue.

12. Method (100) according to one of claims 9 to 11, wherein the machine-readable information (17) is overlayed on the animated graphical pattern (20), so that the machine-readable information (17) appears to be surrounded by a strip (31) of the animated graphical pattern (20), wherein preferably the time information (19) is overlayed on the animated graphical pattern (20) in the strip (31).

13. Method (100) according to one of claims 4 to 12, wherein a boundary (29) of the animated graphical pattern (20) is a rectangle or a square (30), wherein the machine-readable information (17) is preferably displayed centered in the animated graphical pattern (20).

14. Computer program product comprising instructions which, when the program is executed by an electronic mobile device (200), in particular by a smartphone (12) or a smartwatch, cause the electronic mobile device (200) to carry out a method (100) according to one of the preceding claims.

15. Electronic mobile device (200), in particular smartphone (12) or smart watch, comprising a data storage device (32), wherein a computer program product according to claim 14 is stored in the data storage device (32).
